# EUROPEAN PATENT APPLICATION

(11) **EP 4 848 537 A1**
(43) Date of publication of application: **02.12.2026**
(21) Application number: 24952391.1
(22) Date of filing: 29.08.2024
(51) Int. Cl.: H02J 50/12, H02J 50/60, H02J 7/00

(54) **CONTROLLER OF WIRELESS CHARGING DEVICE, POWER SUPPLY MODULE AND ELECTRONIC DEVICE**

(71) Applicant: HUAWEI TECHNOLOGIES CO., LTD., Shenzhen, Guangdong 518129 (CN)
(72) Inventor: LI, Yuechao, Shenzhen, Guangdong 518129 (CN); WANG, Yong, Shenzhen, Guangdong 518129 (CN); WANG, Chao, Shenzhen, Guangdong 518129 (CN); LIU, Yan, Shenzhen, Guangdong 518129 (CN)
(74) Representative: Huawei European IPR
(86) International application number: PCT/CN2024/115672
(87) International publication number: WO 2026/044637

(57) **Abstract**

A controller used in a wireless charging device is provided. The controller is configured to obtain first information, where the first information is related to an actual relative position of an electronic device on a transmitting coil, and the actual relative position is a three-dimensional position. The controller is further configured to determine, based on the first information, a threshold used for foreign object detection when the electronic device is at the actual relative position on the transmitting coil. The controller is further configured to perform foreign object detection based on the threshold. Because the threshold is information related to the actual relative position, the threshold is more accurate in comparison with use of a fixed threshold. This can improve foreign object detection precision and device compatibility. In addition, the threshold is a value related to the three-dimensional position, and therefore, accuracy of the threshold can be improved.

## Description

### TECHNICAL FIELD

This application relates to the field of electronic technologies, and in particular, to a controller of a wireless charging device, a power supply module, and an electronic device.

### BACKGROUND

With popularization of wireless charging technologies, many wireless charging products emerge in the market, among which mobile phone transmitters according to a wireless power consortium (wireless power consortium, WPC) Qi standard have a largest market share.

During application, the wireless charging product is usually in an open scenario. For example, a mobile phone having a wireless charging function is charged using a charger used as an accessory, and the mobile phone and the charger are independent and separable product forms. A transmit (transmit, TX) apparatus in the accessory needs to perform real-time detection and identification of a receive (receive, RX) apparatus (which is usually installed inside an electronic device, for example, a mobile phone, having the wireless charging function) placed in the accessory, and upon identifying the receive apparatus, starts to control charging to complete transmission of electrical energy. In addition, it is also required to determine whether there is a foreign object between the transmit apparatus and the receive apparatus. If the foreign object cannot be accurately detected, there is a scenario in which the foreign object (for example, a bank card or an identity card) may be damaged in a charging process. This greatly restricts development of the wireless charging industry. As a result, foreign object detection has become a primary issue in safety of wireless charging and is also a pain point in the industry.

However, a foreign object detection capability in the current wireless charging is limited, with a small coverage, and many foreign objects cannot be detected. This seriously threatens safety of wireless charging and is extremely unfavorable for further development of the industry. Currently, a foreign object detection method mainly used is a quality factor (quality factor, Q) value-based detection method. A principle of the Q value-based detection method is: When there is a foreign object between the transmit apparatus and the receive apparatus, a parameter of an inductor coil of the transmit apparatus is affected, then affecting a Q value of the inductor coil. Therefore, whether the foreign object exits can be reflected by detecting the Q value of the inductor coil. Therefore, foreign object detection accuracy can be improved by improving detection precision and a detection speed of the Q value, and how to detect the Q value with high precision becomes a problem that needs to be resolved currently.

### SUMMARY

According to a first aspect, this application provides a controller used in a wireless charging device, where the wireless charging device is configured to wirelessly charge an electronic device, and the wireless charging device includes a resonant network, an inverter circuit, and the controller; the resonant network includes a transmitting coil and a resonant capacitor;
an input end of the inverter circuit is configured to connect to a direct current power supply, and an output end of the inverter circuit is configured to connect to the resonant network; the controller is configured to obtain first information, where the first information is related to an actual relative position of the electronic device on the transmitting coil, and the actual relative position is a three-dimensional position; the controller is further configured to determine, based on the first information, a threshold used for foreign object detection when the electronic device is at the actual relative position on the transmitting coil; and the controller is further configured to perform foreign object detection based on the threshold.

Because the threshold is information related to the actual relative position, the threshold is more accurate in comparison with use of a fixed threshold. This can improve foreign object detection precision and device compatibility. In addition, the threshold is a value related to the three-dimensional position, and therefore, accuracy of the threshold can be improved.

The resonant capacitor may include an LC.

In a possible implementation, the threshold used for foreign object detection is specifically a threshold of a quality factor.

In a possible implementation, the controller is further configured to obtain second information, where the second information includes a quality factor or an alternating current resistance value of the transmitting coil when the electronic device is at a preset relative position on the transmitting coil, and the second information further includes an inductance of the transmitting coil or frequency information of the resonant network when the electronic device is at the preset relative position on the transmitting coil. For example, the frequency information may be a damped resonant frequency.

The first information includes a quality factor or an alternating current resistance value of the transmitting coil when the electronic device is at the actual relative position on the transmitting coil, and the first information further includes an inductance of the transmitting coil or frequency information of the resonant network when the electronic device is at the actual relative position on the transmitting coil; and the controller determines, based on the second information, the threshold used for foreign object detection when the electronic device is at the actual relative position on the transmitting coil.

The inductance or the frequency information of the resonant network is information related to a position (especially a height), and the second information may indicate a threshold of the quality factor at the preset relative position of the electronic device on the transmitting coil. After the first information, that is, the inductance or the frequency information of the resonant network at the actual relative position, is obtained, the threshold used for foreign object detection when the electronic device is at the actual relative position on the transmitting coil may be determined based on the second information. In this way, foreign object detection can be performed based on the threshold. Because the threshold is the information related to the actual relative position, the threshold is more accurate in comparison with use of the fixed threshold. This can improve foreign object detection precision and device compatibility.

A value of the inductance or a value of the frequency information of the resonant network is related to a relative height between the electronic device and the transmitting coil, which is equivalent to that the three-dimensional position is considered, so that accuracy of the threshold can be improved.

In a possible implementation, the threshold is obtained based on a mapping relationship, the mapping relationship indicates thresholds, used for foreign object detection, of the electronic device at different positions on the transmitting coil, and the mapping relationship is determined based on the second information.

In a possible implementation, there is one preset relative position, and the mapping relationship is determined based on the second information and a preset function, where the second information is for determining a parameter value in the preset function.

For example, the preset function is a linear function, and at least one of the quality factor or the alternating current resistance value and at least one of the inductance or the frequency information in the second information may be used as a numerical point to determine a parameter of the linear function.

In a possible implementation, there are a plurality of preset relative positions, and the mapping relationship is obtained, based on the second information, by fitting a function.

For example, at least one of the quality factor or the alternating current resistance value and at least one of the inductance or the frequency information in the second information may be used as a plurality of numerical points to fit and determine a parameter of the function.

In a possible implementation, when obtaining the second information, the controller is specifically configured to:
obtain third information, where the third information includes a quality factor or an alternating current resistance value of a standard coil when the electronic device is at a preset relative position on the preset standard coil, and the third information further includes an inductance of the standard coil or frequency information of the resonant network in the standard coil when the electronic device is at the preset relative position on the standard coil; and
convert the third information into the second information based on a parameter relationship between the standard coil and the transmitting coil.

In a possible implementation, the inductance, the frequency information, the quality factor, or the alternating current resistance value is obtained based on an on-resistance of the inverter circuit and an alternating current resistance, an inductance, and a capacitance value of the resonant network.

In this embodiment of this application, more parameters, such as an inductance L of a receiving coil and Rac at 100 kHz, a capacitance value C and Esr at 100 kHz, a MOS Rds_on of a rectifier bridge, and an LDO voltage drop, are considered, so that an error of foreign object detection is smaller.

According to a second aspect, this application provides a control method, applied to a wireless charging device, where the wireless charging device is configured to wirelessly charge an electronic device, the wireless charging device includes a resonant network, an inverter circuit, and a controller, the resonant network includes a transmitting coil and a resonant capacitor, an input end of the inverter circuit is configured to connect to a direct current power supply, and an output end of the inverter circuit is configured to connect to the resonant network; and
the method includes:
The controller obtains first information, where the first information is related to an actual relative position of the electronic device on the transmitting coil, and the actual relative position is a three-dimensional position;
determines, based on the first information, a threshold used for foreign object detection when the electronic device is at the actual relative position on the transmitting coil; and
performs foreign object detection based on the threshold.

In a possible implementation, the method further includes:
obtaining second information, where the second information includes a quality factor or an alternating current resistance value of the transmitting coil when the electronic device is at a preset relative position on the transmitting coil, and the second information further includes an inductance of the transmitting coil or frequency information of the resonant network when the electronic device is at the preset relative position on the transmitting coil; and
the first information includes a quality factor or an alternating current resistance value of the transmitting coil when the electronic device is at the actual relative position on the transmitting coil, and the first information further includes an inductance of the transmitting coil or frequency information of the resonant network when the electronic device is at the actual relative position on the transmitting coil; and
determining, by the controller based on the second information, the threshold used for foreign object detection when the electronic device is at the actual relative position on the transmitting coil.

In a possible implementation, obtaining the second information includes:
obtaining third information, where the third information includes a quality factor or an alternating current resistance value of a standard coil when the electronic device is at a preset relative position on the preset standard coil, and the third information further includes an inductance of the standard coil or frequency information of the resonant network in the standard coil when the electronic device is at the preset relative position on the standard coil; and
converting the third information into the second information based on a parameter relationship between the standard coil and the transmitting coil.

In a possible implementation, the inductance, the frequency information, the quality factor, or the alternating current resistance value is obtained based on an on-resistance of the inverter circuit and an alternating current resistance, an inductance, and a capacitance value of the resonant network.

In a possible implementation, there is one or more preset positions.

According to a third aspect, this application provides a power supply module, including a resonant network, an inverter circuit, and the controller according to any one of the first aspect, where the resonant network includes a transmitting coil and a resonant capacitor; and an input end of the inverter circuit is configured to connect to a direct current power supply, and an output end of the inverter circuit is configured to connect to the resonant network.

According to a fourth aspect, this application provides an electronic device, including the controller according to any one of the first aspect of this application.

According to a fifth aspect, this application provides an electronic device, including the power supply module according to any one of the third aspect of this application.

### BRIEF DESCRIPTION OF DRAWINGS

FIG. 1 is a diagram of an electronic device according to this application;
FIG. 2 is another diagram of an electronic device according to this application;
FIG. 3 is a diagram of a power supply module according to an embodiment of this application;
FIG. 4 is a schematic flowchart of foreign object detection according to an embodiment of this application;
FIG. 5 is a diagram of a relationship between a Q value distribution and a height offset;
FIG. 6 is a schematic flowchart of foreign object detection according to an embodiment of this application; and
FIG. 7 is a diagram of parameter calculation.

### DESCRIPTION OF EMBODIMENTS

The following describes embodiments of the present invention with reference to accompanying drawings in embodiments of the present invention. Terms used in some implementations of the present invention are merely used for explaining specific embodiments of the present invention, and are not intended to limit the present invention.

The following describes embodiments of this application with reference to the accompanying drawings. Persons of ordinary skill in the art may learn that, with development of technologies and emergence of new scenarios, technical solutions provided in embodiments of this application are also applicable to a similar technical problem.

In the specification, the claims, and the accompanying drawings of this application, terms such as "first" and "second" are used for distinguishing between similar objects but do not necessarily describe a specific order or sequence. It should be understood that the terms used in this way are interchangeable in appropriate circumstances, and this is merely a differentiation manner used when objects having a same attribute are described in embodiments of this application. In addition, terms "include", "have", and any variants thereof are intended to cover a non-exclusive inclusion, so that a process, a method, a system, a product, or a device that includes a series of units is not necessarily limited to those units, but may include other units not expressly listed or inherent to the process, method, product, or device.

Terms "substantially (substantially)", "about (about)", and similar expressions used in this specification are used as approximation terms rather than degree terms, and are intended to take into account inherent deviations of measured values or calculated values that are known to persons of ordinary skill in the art. In addition, in description of embodiments of the present invention, "may (may)" indicates "one or more possible embodiments". Terms "use (use)", "using (using)", and "used (used)" used in this specification may be considered to be synonymous with terms "utilize (utilize)", "utilizing (utilizing)", and "utilized (utilized)" respectively. In addition, the term "example (example)" is intended to indicate an example or an illustration.

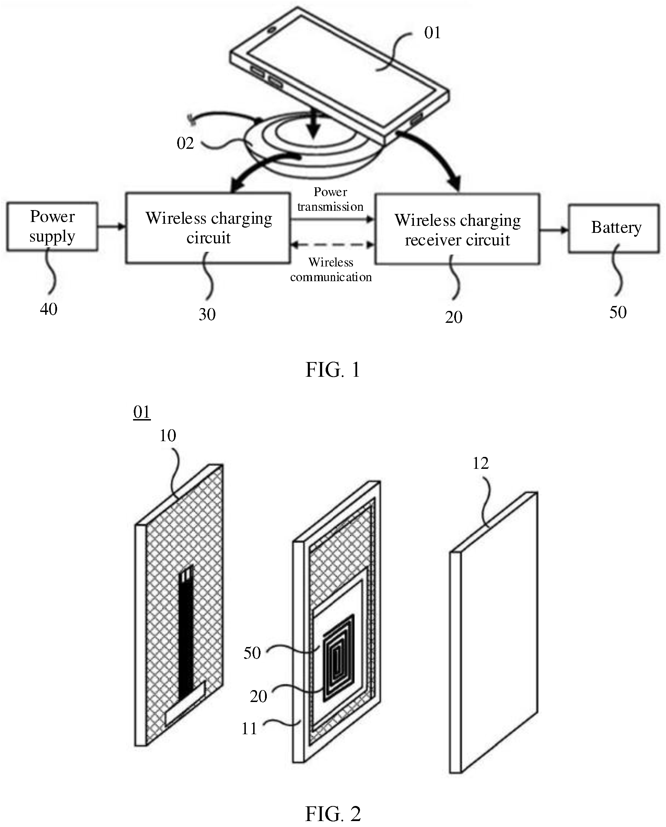

Embodiments of this application are applied to a wireless charging system. The wireless charging system includes an electronic device 01 and a charger 02 shown in FIG. 1. The charger 02 is used as a transmitter device, and the electronic device 01 is used as a receiver device. The electronic device includes a device having a wireless function, for example, a mobile phone (mobile phone), a tablet computer (pad), a computer having a wireless transceiver function, a smart wearable product (for example, a smart watch or a smart band), a virtual reality (virtual reality, VR) terminal device, or an augmented reality (augmented reality, AR) terminal device. Alternatively, the electronic device may be an electronic product, for example, a wireless charging electric vehicle, a wireless charging household small appliance (for example, a soy milk machine or a robotic vacuum cleaner), or an uncrewed aerial vehicle. A specific form of the electronic device is not specifically limited in embodiments of this application. For ease of description, the following uses an example in which the electronic device 01 is the mobile phone shown in FIG. 1 for description.

To wirelessly charge the electronic device 01, as shown in FIG. 1, a wireless charging receiver circuit 20 and a battery 50 connected to the wireless charging receiver circuit 20 are disposed in the electronic device 01. For example, as shown in FIG. 2, the electronic device 01 mainly includes a display panel (display panel, DP) 10. The display panel 10 may be a liquid crystal display (liquid crystal display, LCD) or an organic light-emitting diode (organic light-emitting diode, OLED) display. This is not limited in this application. The electronic device 01 further includes a middle frame 11 and a housing 12 shown in FIG. 2. The display panel 10 and the housing 12 are respectively located on two sides of the middle frame 11, with the back of the display panel 10 facing the housing 12, and the display panel 10 connected to the housing 12 via the middle frame 11. The wireless charging receiver circuit 20 and the battery 50 may be disposed on a side surface of the middle frame 11 facing the housing 12.

The charger 02 includes a wireless charging circuit 30 disposed in the charger 02 as shown in FIG. 1, and a power supply 40 connected to the wireless charging circuit 30. The power supply 40 is used to provide electrical energy for charging. In some embodiments of this application, the power supply 40 may be a power adapter. The power supply 40 can convert a 220 V alternating current into a direct current (for example, 5 V or 10 V) based on a requirement for charging power, and transmit the direct current to the wireless charging circuit 30.

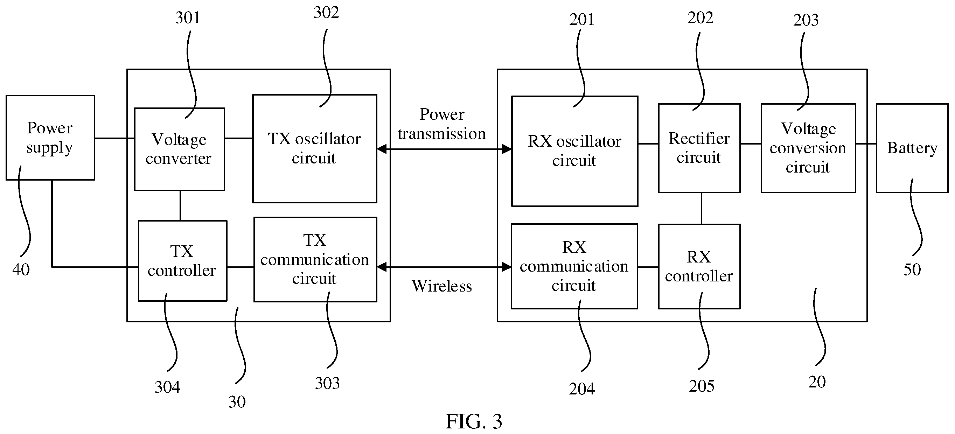

When a side on which the housing 12 of the electronic device 01 is located is placed on the charger 02, to wirelessly charge the electronic device 01, as shown in FIG. 3, the wireless charging circuit 30 includes a voltage converter 301 and a TX oscillator circuit 302. The voltage converter 301 may be a direct current (direct current, DC) to alternating current (alternating current, AC) converter, that is, a DC/AC converter. The wireless charging receiver circuit 20 further includes an RX oscillator circuit 201 and a rectifier circuit 202.

Based on this, the voltage converter 301 is connected to the power supply 40 and can convert a direct current output by the power supply 40 into an alternating current. In addition, the TX oscillator circuit 302 is connected to the voltage converter 301. After receiving the alternating current output by the voltage converter 301, the TX oscillator circuit 302 may generate an alternating magnetic field. The RX oscillator circuit 201 receives the alternating magnetic field and outputs an alternating current, so that power from the TX oscillator circuit 301 can be transmitted to the RX oscillator circuit 201.

In addition, the RX oscillator circuit 201 is connected to the rectifier circuit 202, and the rectifier circuit 202 can rectify an alternating current output by the rectifier circuit 202 to generate a rectified voltage Vrect. Based on this, the wireless charging receive apparatus 20 further includes at least one stage of voltage conversion circuit 203 connected to the rectifier circuit 202. The voltage conversion circuit 203 may convert the rectified voltage Vrect into a charging voltage (for example, 3.7 V) for the battery 20. After the charging voltage is applied to two ends of the battery 50, a current output by the voltage conversion circuit 203 may be used to charge the battery 50.

In some embodiments of this application, the voltage conversion circuit 203 includes a DC/DC conversion circuit. The DC/DC conversion circuit may be a buck (Buck) circuit or a switched capacitor (switched capacitor, SC) circuit. An input-output voltage ratio of the buck circuit may be flexibly adjusted. For example, the input-output voltage ratio may be set to a decimal. An input-output voltage ratio of the SC circuit is an integer. However, the SC circuit can withstand a relatively high input-output voltage difference and has a relatively high voltage conversion efficiency.

In addition, to control the foregoing charging process, wireless communication may be established between the wireless charging circuit 30 and the wireless charging receiver circuit 20. In this case, as shown in FIG. 3, the wireless charging circuit 30 may include a transmitter (transmitter, TX) communication circuit 303, and the wireless charging receiver circuit 20 may include a receiver (receiver, RX) communication circuit 204. The TX communication circuit 303 and the RX communication circuit 204 may be wirelessly connected by using Bluetooth (Bluetooth), wireless broadband (wireless-fidelity, Wi-Fi), a Zigbee (Zigbee) protocol, a radio frequency identification (radio frequency identification, RFID) technology, a long range (long range, Lora) wireless technology, and a near-field communication (near-field communication, NFC) technology, so that wireless communication can be established between the wireless charging circuit 30 and the wireless charging receiver circuit 20. In this way, a control signal or charging data can be transmitted between the TX communication circuit 303 and the RX communication circuit 204. The charging data may indicate a charging type. For example, the charging data may be a charging protocol, for example, the wireless charging standard Qi launched by the wireless power consortium (wireless power consortium, WPC), such as a BPP (basic power profile) protocol or an EPP (extended power profile) protocol.

In an existing WPC Qi standard solution strategy, only a coil parameter is considered in a reference value of a power transmitter (charging pad), resulting in low detection precision at high power. In addition, only plane parameters of the power transmitter and a power receiver are considered in Qi, and a height between two coils is detected, but the height h is not used. In addition, a position at which the mobile phone is placed is not specified in Qi. By default, the mobile phone is placed in the middle.

To resolve the foregoing problem, an embodiment of this application provides a controller used in a wireless charging device. The wireless charging device is configured to wirelessly charge an electronic device, and the wireless charging device includes a resonant network, an inverter circuit, and the controller. The resonant network includes a transmitting coil and a resonant capacitor. An input end of the inverter circuit is configured to connect to a direct current power supply, and an output end of the inverter circuit is configured to connect to the resonant network.

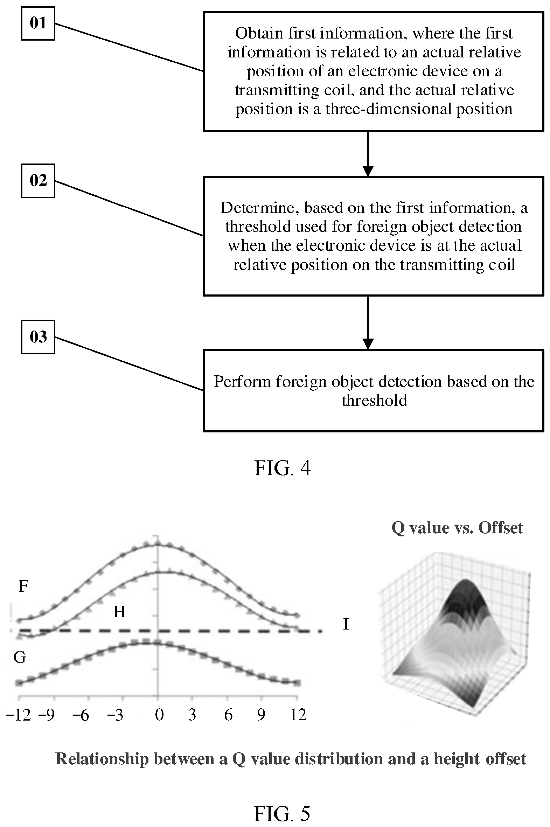

Refer to FIG. 4. The controller is configured to perform the following steps.

01: Obtain first information, where the first information is related to an actual relative position of the electronic device on the transmitting coil, and the actual relative position is a three-dimensional position.

In a possible implementation, the first information includes a quality factor or an alternating current resistance value of the transmitting coil when the electronic device is at the actual relative position on the transmitting coil, and the first information further includes an inductance of the transmitting coil or frequency information of the resonant network when the electronic device is at the actual relative position on the transmitting coil.

In a possible implementation, the controller is further configured to obtain second information, where the second information includes a quality factor or an alternating current resistance value of the transmitting coil when the electronic device is at a preset relative position on the transmitting coil, and the second information further includes an inductance of the transmitting coil or frequency information of the resonant network when the electronic device is at the preset relative position on the transmitting coil.

In a possible implementation, third information may be obtained, where the third information includes a quality factor or an alternating current resistance value of a standard coil when the electronic device is at a preset relative position on the preset standard coil, and the third information further includes an inductance of the standard coil or frequency information of the resonant network in the standard coil when the electronic device is at the preset relative position on the standard coil; and the third information is converted into the second information based on a parameter relationship between the standard coil and the transmitting coil.

The standard coil (for example, a standard TX coil of a power transmitter) may be defined as, but is not limited to, an MP-A2 parameter.

In a possible implementation, a value of the inductance or a value of the frequency information of the resonant network is related to a relative height between the electronic device and the transmitting coil. In this embodiment of this application, compared with a two-dimensional relative position, height information between the power transmitter and a power receiver is considered, and a Q value threshold is calculated in three-dimensional space, so that foreign object detection accuracy can be improved. For example, refer to FIG. 5. FIG. 5 is a diagram of a relationship between a Q value threshold distribution and a height offset. Each curve is a threshold distribution corresponding to a height offset (where it is clear that an offset of coordinates x and y, that is, a position of a horizontal axis, may be fixed).

02: Determine, based on the first information, a threshold used for foreign object detection when the electronic device is at the actual relative position on the transmitting coil.

The inductance or the frequency information of the resonant network is information related to a position (especially the height), and the second information may indicate a threshold of the quality factor at the preset relative position of the electronic device on the transmitting coil. After the first information, that is, the inductance or the frequency information of the resonant network at the actual relative position, is obtained, the threshold used for foreign object detection when the electronic device is at the actual relative position on the transmitting coil may be determined based on the second information. In this way, foreign object detection can be performed based on the threshold. Because the threshold is information related to the actual relative position, the threshold is more accurate in comparison with use of a fixed threshold. This can improve foreign object detection precision and device compatibility.

The value of the inductance or the value of the frequency information of the resonant network is related to the relative height between the electronic device and the transmitting coil, which is equivalent to that the three-dimensional position is considered, so that accuracy of the threshold can be improved.

In a possible implementation, the threshold is obtained based on a mapping relationship, the mapping relationship indicates thresholds, used for foreign object detection, of the electronic device at different positions on the transmitting coil, and the mapping relationship is determined based on the second information.

In a possible implementation, there is one preset relative position, and the mapping relationship is determined based on the second information and a preset function, where the second information is for determining a parameter value in the preset function.

For example, the preset function is a linear function, and at least one of the quality factor or the alternating current resistance value and at least one of the inductance or the frequency information in the second information may be used as a numerical point to determine a parameter of the linear function.

In a possible implementation, there are a plurality of preset relative positions, and the mapping relationship is obtained, based on the second information, by fitting a function.

For example, at least one of the quality factor or the alternating current resistance value and at least one of the inductance or the frequency information in the second information may be used as a plurality of numerical points to fit and determine a parameter of the function.

In a Qi standard, only accuracy within 15 W is met, while foreign object detection for wireless charging of at least 80 W can be met in the solution of this embodiment of this application.

03: Perform foreign object detection based on the threshold.

In a possible implementation, the inductance, the frequency information, the quality factor, or the alternating current resistance value is obtained based on an on-resistance of the inverter circuit and an alternating current resistance, an inductance, and a capacitance value of the resonant network.

In this embodiment of this application, more parameters, such as an inductance L of a receiving coil and Rac at 100 kHz, a capacitance value C and Esr at 100 kHz, a MOS Rds_on of a rectifier bridge, and an LDO voltage drop, are considered, so that an error of foreign object detection is smaller.

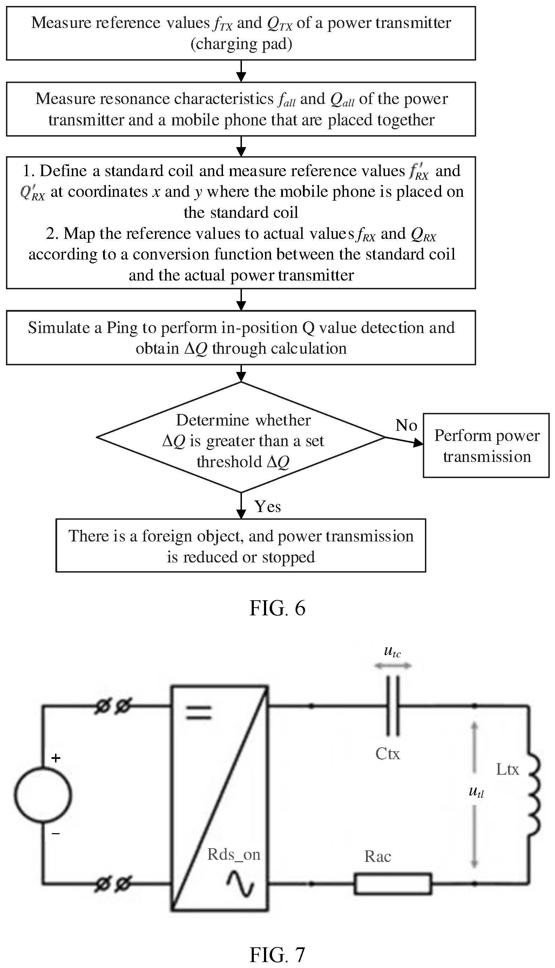

For example, a reference value of the quality factor of the transmitting coil may be calculated according to the following formula: Q=wL/r, $w = 1 / \sqrt{LC}$, where L is an inductance of the transmitting coil, C is a capacitance value of the resonant capacitor, and *r* includes an on-resistance of an inverter MOS and an alternating current resistance of a resonant cavity (where for details, refer to FIG. 7).

In a possible implementation, when performing foreign object detection based on an actual value of the quality factor, the controller is specifically configured to perform foreign object detection based on a reference value of a resonant frequency of the resonant network and an actual value of a quality factor of the receiving coil, where the reference value of the resonant frequency of the transmitting coil is obtained based on the capacitance value of the resonant capacitor.

For example, the reference value of the resonant frequency of the transmitting coil may be calculated according to the following formula: $f = 1 / \left(2π\sqrt{LC}\right)$, where L is an inductance of the transmitting coil, and C is a capacitance value of the resonant capacitor (where for details, refer to FIG. 7).

In this embodiment of this application, more parameters, such as the inductance L of the receiving coil and Rac at 100 kHz, the capacitance value C and Esr at 100 kHz, the MOS Rds_on of the rectifier bridge, and the LDO voltage drop, are considered, so that the error of foreign object detection is smaller.

Refer to FIG. 6. FIG. 6 is a schematic flowchart of foreign object detection.

This application further provides an electronic device, including the controller provided in any one of embodiments of this application, or including the power supply module provided in any one of embodiments of this application.

In the foregoing embodiments, the method performed by the controller provided in embodiments of this application is described. To implement functions in the method provided in embodiments of this application, the controller serving as an entity for performing the method may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. It should be noted and understood that division of the modules of the foregoing apparatus is merely division of logical functions, and during an actual implementation, all or some modules may be integrated into one physical entity, or may be physically separated. In addition, all these modules may be implemented in a form of software invoked by a processing element, or may be implemented in a form of hardware. Alternatively, some modules may be implemented in a form of software invoked by a processing element, or may be implemented in a form of hardware. The module may be an independently disposed processing element, may be integrated into a chip of the foregoing apparatus for implementation, or may be stored in a memory of the foregoing apparatus in a form of program code, and is invoked by a processing element of the foregoing apparatus to perform a function of the foregoing determining module. Implementations of other modules are similar. In addition, all or some of the modules may be integrated, or may be independently implemented. The processing element herein may be an integrated circuit, and has a signal processing capability. In an implementation process, steps in the foregoing methods or the foregoing modules can be implemented by using a hardware integrated logic circuit in the processor element, or by using instructions in a form of software. For example, the foregoing modules may be configured as one or more integrated circuits for implementing the foregoing methods, such as one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of program code invoked by a processing element, the processing element may be a general-purpose processor, for example, a central processing unit (central processing unit, CPU) or another processor that can invoke the program code. For another example, the modules may be integrated together and implemented in a form of a system-on-a-chip (system-on-a-chip, SoC).

In the foregoing embodiments, all or some of the steps performed by the controller may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk solid state disk (SSD)), or the like.

This application further provides a computer-readable storage medium. The computer-readable storage medium stores computer instructions. When the computer instructions are executed, any one of the methods performed by the controller in the foregoing embodiments of this application may be performed.

An embodiment of this application further provides a chip for running instructions. The chip is configured to perform any one of the foregoing methods performed by the controller in this application.

An embodiment of this application further provides a computer program product. The program product includes a computer program. The computer program is stored in a storage medium. At least one processor may read the computer program from the storage medium. When executing the computer program, the at least one processor may implement any of the foregoing methods performed by the controller in this application.

Persons of ordinary skill in the art may understand that all or some steps in the foregoing embodiments may be implemented by hardware related to program instructions. The program may be stored in a computer-readable storage medium. When the program is executed, the steps in the foregoing method embodiments are performed. The storage medium includes any medium that can store program code, for example, a ROM, a RAM, a magnetic disk, or an optical disc.

Persons of ordinary skill in the art may understand that, to facilitate description of the technical solutions of this application, embodiments of this application are separately described by using functional modules. Some or all circuit components in the modules may overlap. This is not construed as a limitation on the protection scope of this application.

Finally, it should be noted that the foregoing embodiments are merely intended for describing the technical solutions of this application but not for limiting the technical solutions. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A controller used in a wireless charging device, wherein the wireless charging device is configured to wirelessly charge an electronic device, and the wireless charging device comprises a resonant network, an inverter circuit, and the controller, wherein
the resonant network comprises a transmitting coil and a resonant capacitor;
an input end of the inverter circuit is configured to connect to a direct current power supply, and an output end of the inverter circuit is configured to connect to the resonant network;
the controller is configured to obtain first information, wherein the first information is related to an actual relative position of the electronic device on the transmitting coil, and the actual relative position is a three-dimensional position;
the controller is further configured to determine, based on the first information, a threshold used for foreign object detection when the electronic device is at the actual relative position on the transmitting coil; and
the controller is further configured to perform foreign object detection based on the threshold.

2. The controller according to claim 1, wherein the controller is further configured to obtain second information, wherein the second information comprises a quality factor or an alternating current resistance value of the transmitting coil when the electronic device is at a preset relative position on the transmitting coil, and the second information further comprises an inductance of the transmitting coil or frequency information of the resonant network when the electronic device is at the preset relative position on the transmitting coil; and
the first information comprises a quality factor or an alternating current resistance value of the transmitting coil when the electronic device is at the actual relative position on the transmitting coil, and the first information further comprises an inductance of the transmitting coil or frequency information of the resonant network when the electronic device is at the actual relative position on the transmitting coil; and
the controller is configured to determine, based on the first information and the second information, the threshold used for foreign object detection when the electronic device is at the actual relative position on the transmitting coil.

3. The controller according to claim 1 or 2, wherein the threshold is obtained based on a mapping relationship, the mapping relationship indicates thresholds, used for foreign object detection, of the electronic device at different positions on the transmitting coil, and the mapping relationship is determined based on the second information.

4. The controller according to any one of claims 1 to 3, wherein when obtaining the second information, the controller is specifically configured to:
obtain third information, wherein the third information comprises a quality factor or an alternating current resistance value of a standard coil when the electronic device is at a preset relative position on the preset standard coil, and the third information further comprises an inductance of the standard coil or frequency information of the resonant network in the standard coil when the electronic device is at the preset relative position on the standard coil; and
convert the third information into the second information based on a parameter relationship between the standard coil and the transmitting coil.

5. The controller according to any one of claims 1 to 4, wherein the inductance, the frequency information, the quality factor, or the alternating current resistance value is obtained based on an on-resistance of the inverter circuit and an alternating current resistance, an inductance, and a capacitance value of the resonant network.

6. The controller according to any one of claims 1 to 5, wherein there is one or more preset positions.

7. The controller according to any one of claims 1 to 6, wherein the threshold used for foreign object detection is specifically a threshold of the quality factor.

8. A control method, applied to a wireless charging device, wherein the wireless charging device is configured to wirelessly charge an electronic device, and the wireless charging device comprises a resonant network, an inverter circuit, and a controller, wherein the resonant network comprises a transmitting coil and a resonant capacitor, an input end of the inverter circuit is configured to connect to a direct current power supply, and an output end of the inverter circuit is configured to connect to the resonant network; and
the method comprises:
obtaining, by the controller, first information, wherein the first information is related to an actual relative position of the electronic device on the transmitting coil, and the actual relative position is a three-dimensional position;
determining, based on the first information, a threshold used for foreign object detection when the electronic device is at the actual relative position on the transmitting coil; and
performing foreign object detection based on the threshold.

9. The method according to claim 8, wherein the method further comprises:
obtaining second information, wherein the second information comprises a quality factor or an alternating current resistance value of the transmitting coil when the electronic device is at a preset relative position on the transmitting coil, and the second information further comprises an inductance of the transmitting coil or frequency information of the resonant network when the electronic device is at the preset relative position on the transmitting coil; and
the first information comprises a quality factor or an alternating current resistance value of the transmitting coil when the electronic device is at the actual relative position on the transmitting coil, and the first information further comprises an inductance of the transmitting coil or frequency information of the resonant network when the electronic device is at the actual relative position on the transmitting coil; and
determining, by the controller based on the second information, the threshold used for foreign object detection when the electronic device is at the actual relative position on the transmitting coil.

10. The method according to claim 8 or 9, wherein obtaining the second information comprises:
obtaining third information, wherein the third information comprises a quality factor or an alternating current resistance value of a standard coil when the electronic device is at a preset relative position on the preset standard coil, and the third information further comprises an inductance of the standard coil or frequency information of the resonant network in the standard coil when the electronic device is at the preset relative position on the standard coil; and
converting the third information into the second information based on a parameter relationship between the standard coil and the transmitting coil.

11. The method according to any one of claims 8 to 10, wherein the inductance, the frequency information, the quality factor, or the alternating current resistance value is obtained based on an on-resistance of the inverter circuit and an alternating current resistance, an inductance, and a capacitance value of the resonant network.

12. The method according to any one of claims 8 to 11, wherein there is one or more preset positions.

13. A power supply module, comprising a resonant network, an inverter circuit, and the controller according to any one of claims 1 to 7, wherein the resonant network comprises a transmitting coil and a resonant capacitor; and
an input end of the inverter circuit is configured to connect to a direct current power supply, and an output end of the inverter circuit is configured to connect to the resonant network.

14. An electronic device, comprising the controller according to any one of claims 1 to 7, or comprising the power supply module according to claim 12.

## Amended claims

### Amended claims under Art. 19.1 PCT

1. A wireless charging device, wherein the wireless charging device is configured to wirelessly charge an electronic device, and the wireless charging device comprises a transmitting coil;
the wireless charging device is configured to obtain first information, wherein the first information is related to an actual relative position between the electronic device and the transmitting coil, and the actual relative position is a three-dimensional position;
the wireless charging device is further configured to determine, based on the first information, a threshold used for foreign object detection when the electronic device is at the actual relative position on the transmitting coil; and
the wireless charging device is further configured to perform foreign object detection based on the threshold.

2. The wireless charging device according to claim 1, wherein the wireless charging device comprises a resonant network, and the resonant network comprises the transmitting coil;
the wireless charging device is further configured to obtain second information, and the wireless charging device is specifically configured to determine, based on the first information and the second information, the threshold used for foreign object detection when the electronic device is at the actual relative position on the transmitting coil; and
the second information comprises a quality factor or an alternating current resistance value of the transmitting coil when the electronic device is at a preset relative position on the transmitting coil, and the second information further comprises an inductance of the transmitting coil or frequency information of the resonant network when the electronic device is at the preset relative position on the transmitting coil.

3. The wireless charging device according to claim 1 or 2, wherein
the first information comprises a quality factor or an alternating current resistance value of the transmitting coil when the electronic device is at the actual relative position on the transmitting coil, or the first information further comprises an inductance of the transmitting coil or frequency information of the resonant network when the electronic device is at the actual relative position on the transmitting coil.

4. The wireless charging device according to any one of claims 1 to 3, wherein the threshold is obtained based on a mapping relationship, the mapping relationship indicates thresholds, used for foreign object detection, of the electronic device at different positions on the transmitting coil, and the mapping relationship is determined based on the second information.

5. The wireless charging device according to any one of claims 1 to 4, wherein when obtaining the second information, the wireless charging device is specifically configured to:
obtain third information, and convert the third information into the second information based on a parameter relationship between the standard coil and the transmitting coil, wherein
the third information comprises at least one of the following:
a quality factor or an alternating current resistance value of the standard coil when the electronic device is at a preset relative position on the preset standard coil; and
an inductance of the standard coil or frequency information of the resonant network in the standard coil when the electronic device is at the preset relative position on the standard coil.

6. The wireless charging device according to any one of claims 2 to 5, wherein the inductance, the frequency information, the quality factor, or the alternating current resistance value is obtained based on an on-resistance of an inverter circuit and an alternating current resistance, an inductance, and a capacitance value of the resonant network.

7. The wireless charging device according to any one of claims 2 to 6, wherein there is one or more preset relative positions.

8. The wireless charging device according to any one of claims 1 to 7, wherein the threshold used for foreign object detection is specifically a threshold of the quality factor.

9. A control method, applied to a wireless charging device, wherein the wireless charging device is configured to wirelessly charge an electronic device, and the wireless charging device comprises a transmitting coil; and
the method comprises:
obtaining first information, wherein the first information is related to an actual relative position between the electronic device and the transmitting coil, and the actual relative position is a three-dimensional position;
determining, based on the first information, a threshold used for foreign object detection when the electronic device is at the actual relative position on the transmitting coil; and
performing foreign object detection based on the threshold.

10. The method according to claim 9, wherein the wireless charging device comprises a resonant network and an inverter circuit, and the resonant network comprises the transmitting coil; and
the method further comprises:
obtaining second information, wherein determining, based on the first information, the threshold used for foreign object detection when the electronic device is at the actual relative position on the transmitting coil comprises: determining, based on the first information and the second information, the threshold used for foreign object detection when the electronic device is at the actual relative position on the transmitting coil, wherein
the second information comprises a quality factor or an alternating current resistance value of the transmitting coil when the electronic device is at a preset relative position on the transmitting coil, and the second information further comprises an inductance of the transmitting coil or frequency information of the resonant network when the electronic device is at the preset relative position on the transmitting coil.

11. The method according to claim 9 or 10, wherein obtaining the second information comprises:
obtaining third information, and converting the third information into the second information based on a parameter relationship between the standard coil and the transmitting coil, wherein
the third information comprises a quality factor or an alternating current resistance value of the standard coil when the electronic device is at a preset relative position on the preset standard coil, and the third information further comprises an inductance of the standard coil or frequency information of the resonant network in the standard coil when the electronic device is at the preset relative position on the standard coil.

12. The method according to any one of claims 9 to 11, wherein the inductance, the frequency information, the quality factor, or the alternating current resistance value is obtained based on an on-resistance of the inverter circuit and an alternating current resistance, an inductance, and a capacitance value of the resonant network.

13. The method according to any one of claims 9 to 12, wherein there is one or more preset relative positions.

14. A control apparatus, used in a wireless charging device, wherein the wireless charging device is configured to wirelessly charge an electronic device, and the wireless charging device comprises a transmitting coil; and the control apparatus comprises:
a module configured to obtain first information, wherein the first information is related to an actual relative position between the electronic device and the transmitting coil, and the actual relative position is a three-dimensional position;
a module configured to determine, based on the first information, a threshold used for foreign object detection when the electronic device is at the actual relative position on the transmitting coil; and
a module configured to perform foreign object detection based on the threshold.

15. The apparatus according to claim 14, wherein the wireless charging device comprises a resonant network and an inverter circuit, and the resonant network comprises the transmitting coil;
the module configured to obtain the first information is further configured to obtain second information, and the module configured to perform foreign object detection based on the threshold is specifically configured to determine, based on the first information and the second information, the threshold used for foreign object detection when the electronic device is at the actual relative position on the transmitting coil; and
the second information comprises a quality factor or an alternating current resistance value of the transmitting coil when the electronic device is at a preset relative position on the transmitting coil, and the second information further comprises an inductance of the transmitting coil or frequency information of the resonant network when the electronic device is at the preset relative position on the transmitting coil.

16. The apparatus according to claim 14 or 15, wherein the module configured to obtain the first information is specifically configured to:
obtain third information, and convert the third information into the second information based on a parameter relationship between the standard coil and the transmitting coil, wherein
the third information comprises a quality factor or an alternating current resistance value of the standard coil when the electronic device is at a preset relative position on the preset standard coil, and the third information further comprises an inductance of the standard coil or frequency information of the resonant network in the standard coil when the electronic device is at the preset relative position on the standard coil.

17. The apparatus according to any one of claims 14 to 16, wherein the inductance, the frequency information, the quality factor, or the alternating current resistance value is obtained based on an on-resistance of the inverter circuit and an alternating current resistance, an inductance, and a capacitance value of the resonant network.

18. The apparatus according to any one of claims 14 to 17, wherein there is one or more preset relative positions.

19. A wireless charging device, wherein the wireless charging device is configured to wirelessly charge an electronic device, and the wireless charging device comprises a transmitting coil;
the wireless charging device is configured to obtain second information, wherein the second information comprises at least one of the following: a quality factor or an alternating current resistance value of the transmitting coil when the electronic device is at a preset relative position on the transmitting coil; an inductance of the transmitting coil or frequency information of the resonant network when the electronic device is at the preset relative position on the transmitting coil; a temperature of the transmitting coil or a temperature of a receiving coil of the electronic device; a size of the transmitting coil or a size of the receiving coil of the electronic device; coupling information between the transmitting coil and the receiving coil of the electronic device; and angle information between the transmitting coil and the receiving coil of the electronic device;
the wireless charging device is further configured to determine, based on the second information, a threshold used for foreign object detection when the electronic device is at the actual relative position on the transmitting coil; and
the wireless charging device is further configured to perform foreign object detection based on the threshold.

20. A power supply module, comprising a resonant network, an inverter circuit, and the control apparatus according to any one of claims 14 to 18, wherein the resonant network comprises a transmitting coil and a resonant capacitor; and
an input end of the inverter circuit is configured to connect to a direct current power supply, and an output end of the inverter circuit is configured to connect to the resonant network.

21. An electronic device, comprising the wireless charging device according to any one of claims 1 to 8 or claim 19, or comprising the power supply module according to claim 20.
